(19) Europäisches Patentamt
European Patent Office
Office européen des brevets

(11) EP 0 906 930 A1

(12) # EUROPÄISCHE PATENTANMELDUNG

(43) Veröffentlichungstag:
**07.04.1999 Patentblatt 1999/14**

(51) Int. Cl.[6]: **C08G 77/388**, D06M 15/643, C08G 77/54

(21) Anmeldenummer: **98114362.1**

(22) Anmeldetag: **30.07.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.10.1997 DE 19743722**

(71) Anmelder: **Wacker-Chemie GmbH**
**81737 München (DE)**

(72) Erfinder:
- **Schröck, Robert, Dr.**
**84503 Altötting (DE)**
- **Dauth, Jochen, Dr.**
**84489 Burghausen (DE)**
- **Deubzer, Bernward, Dr.**
**84489 Burghausen (DE)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Polysiloxane mit heterocyclischen Funktionen, deren Herstellung und Verwendung**

(57) Die Stickstoff im Ring aufweisenden, Heterocyclen enthaltenden Organosiloxanverbindungen, bei denen die Heterocyclen über zweiwertige Reste, die eine Einheit der allgemeinen Formel (I)

$$-\overset{\overset{O}{\|}}{C}-CHR-CR_2-E- \qquad (I),$$

enthalten, worin

**E** die Reste -O-, -S- oder $-NR^1-$, -N= wobei
**R und $R^1$** jeweils einen $C_1$- bis $C_{20}$-Kohlenwasserstoffrest, der gegebenenfalls mit Halogen-, Amin-, Ammonium- oder Mercaptogruppen substituiert ist und der gegebenenfalls durch Gruppen, die ausgewählt werden aus -C(O)-, -C(O)-O-, $-C(O)-NR^3-$, $-NR^3-$, -O-, -S-, unterbrochen sein kann, bedeuten und
**-N=** Bestandteil eines Heterocyclus ist,
an ein Siliciumatom gebunden sind,

können zur Behandlung von Textilfasern, textilen Flächengebilden und Leder und als Stabilisatoren in synthetischen Polymeren eingesetzt werden.

EP 0 906 930 A1

## Beschreibung

Die Erfindung betrifft Stickstoff im Ring aufweisende, Heterocyclen enthaltende Organosiloxanverbindungen und deren Herstellung und Verwendung zur Behandlung von Textilfasern, textilen Flächengebilden und Leder und als Stabilisatoren in synthetischen Polymeren.

In US-A-5,540,952 ist der Einsatz von Stickstoff im Ring aufweisenden, Heterocyclen enthaltenden Polyorganosiloxanen zur vergilbungsarmen Ausrüstung von Textilien beschrieben. Die Heterocyclen enthaltenden Polyorganosiloxane werden dort aus Glycidylgruppen aufweisenden Polyorganosiloxanen und aminofunktionellen Heterocyclen unter langer Temperaturbelastung auf mindestens 120°C oder mittels Hydrosilylierung von SiH-ständigen Polysiloxanen und eines Alkenylgruppen aufweisenden Heterocyclus in Gegenwart eines Platinkatalysators hergestellt. Die Temperaturbelastung führt leicht zur Verfärbung der Produkte; reaktive Gruppen, wie z. B. Acrylate, sind nicht temperaturstabil. Der Platinkatalysator muß aufwendig entfernt werden, da Platin bei Hautkontakt in der Textilanwendung zur Sensibilisierung führen kann.

Es bestand die Aufgabe, Organopolysiloxane, die Stickstoff im Ring aufweisende, Heterocyclen enthaltende Funktionen enthalten, auf einfache Weise bereitzustellen.

Gegenstand der Erfindung sind Stickstoff im Ring aufweisende, Heterocyclen enthaltende Organosiloxanverbindungen, bei denen die Heterocyclen über zwei- oder mehrwertige Reste, die eine Einheit der allgemeinen Formel (I)

$$-\overset{\displaystyle O}{\overset{\|}{C}}-CHR-CR_2-E- \qquad (I),$$

enthalten, worin

**E** die Reste -O-, -S-, $-NR^1-$ oder -N=, wobei

**R und $R^1$** jeweils ein Wasserstoffatom oder einen $C_1$- bis $C_{20}$-Kohlenwasserstoffrest, der gegebenenfalls mit Halogen-, Amin-, Ammonium- oder Mercaptogruppen substituiert ist und gegebenenfalls durch Gruppen, die ausgewählt werden aus -C(O)-, -C(O)-O-, $-C(O)-NR^3-$, $-NR^3-$, -O-, -S-, unterbrochen sein kann, bedeuten und

**-N=** Bestandteil eines Heterocyclus ist,

an ein Siliciumatom gebunden sind.

Die Stickstoff im Ring aufweisende, Heterocyclen enthaltenden Organosiloxanverbindungen ermöglichen neben der seitenständigen und endständigen Funktionalisierung auch den blockartigen Einbau der Heterocyclen in eine Siloxankette.

Vorzugsweise enthalten die Organosiloxanverbindungen Einheiten, die ausgewählt werden aus Einheiten der allgemeinen Formeln (II), (III) und (IV)

$$A_aR^2_bSiX_cO_{[4-(a+b+c)]/2} \qquad (II),$$

$$(O_{(3-h-i)/2}X_iR^2_hSi)-A^1-(SiR^2_hX_iO_{(3-h-i)/2}) \qquad (III),$$

$$(O_{(3-h-i)/2}X_iR^2_h\,Si)-\underset{\displaystyle SiR^2_hX_iO_{(3-h-i)/2}}{\underset{|}{A^2}}-(SiR^2_hX_iO_{(3-h-i)/2}) \qquad (IV),$$

wobei

**$R^2$** einen einwertigen, zweiwertigen oder dreiwertigen Kohlenwasserstoffrest mit 1 bis 50 Kohlenstoffatomen je Rest, der gegebenenfalls mit Halogen-, Amin-, Ammonium-, Mercapto-, Acrylat- oder Maleinimidgruppen substituiert ist,

**X** ein Chloratom oder ein Rest der Formel $-OR^4$, wobei

**$R^4$** ein Wasserstoffatom oder ein Alkylrest mit 1 bis 8 Kohlenstoffatomen je Rest, der durch ein Ethersauerstoffatom substituiert sein kann, oder einen Rest der allgemeinen Formel (V)

$$-R^5-[OCH(CH_3)CH_2]_e[OCH_2CH_2]_f[O(CH_2)_4]_gOR^3 \qquad (V),$$

wobei

**$R^5$** einen zweiwertigen, Kohlenwasserstoffrest mit 2 bis 30 Kohlenstoffatomen je Rest bedeutet, der durch eine oder mehrere Gruppen, die ausgewählt werden aus Gruppen der allgemeinen Formeln (VI) und (VII)

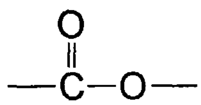 , 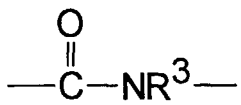 , 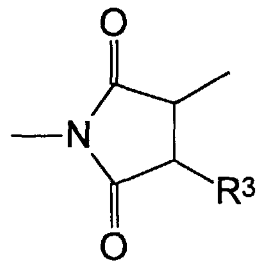 (VI)

$$—NR^3— , —O— , —S— \qquad (VII)$$

unterbrochen sein kann, wobei

**$R^3$** einen Rest **$R^4$** oder einen Rest der Formel $-C(O)-R^4$ darstellt,

**e, f und g** jeweils eine ganze Zahl von 0-200 ist, mit der Maßgabe, daß die Summe $e + f + g \geq 1$ ist,

**a** die Werte 0, 1 oder 2,

**b** die Werte 0, 1, 2 oder 3,

**c** die Werte 0, 1, 2, oder 3 und die Summe $a + b + c \leq 4$ ist,

**h** die Werte 0, 1, 2 oder 3,

**i** die Werte 0, 1, 2 oder 3 und die Summe $h + i \leq 3$ ist,

**A** einen Rest der allgemeinen Formel (VIII)

$$-R^6-(B)_z \qquad (VIII),$$

wobei

**$R^6$** einen zwei- oder dreiwertigen, Kohlenwasserstoffrest mit 2 bis 100 Kohlenstoffatomen je Rest, der durch ein oder mehrere Gruppen, die ausgewählt werden aus Gruppen der vorstehenden allgemeinen Formeln (VI) und (VII) unterbrochen sein kann,

**B** einen Rest der allgemeinen Formeln (IX)

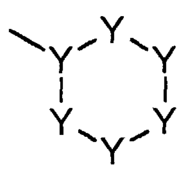 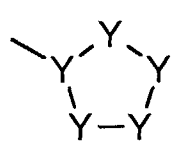

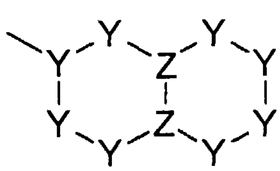 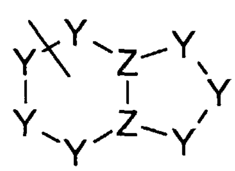

(IX)

wobei

**z** die Werte 1 oder 2 je nach Wertigkeit von $\mathbf{R^6}$,

**Y** ausgewählt wird aus den Gruppen der Formeln $-CR^7{}_2-$, $=CR^7-$, $-NR^7-$, =N-, -O-, =PR5, =P-, -S-, =C=O

**Z** ausgewählt wird aus den Gruppen der Formeln =C=, $=CR^7-$, =N-, =P- ist, mit der Maßgabe, daß $\mathbf{R^6}$ an einer chemisch sinnvollen Position am Heterocyclus sitzt, der Heterocyclus eine chemisch sinnvolle Struktur besitzt und mindestens ein Stickstoffatom enthält, wobei der Heterocyclus gesättigt, ungesättigt oder aromatisch sein kann,

$\mathbf{R^7}$ ein Wasserstoffatom oder einen Substituenten, der ausgewählt wird aus -F, -Cl, -Br, -I, -OH, -SCN, -NC, $-NO_2$, -CN, -SH, -NCO, $-OR^4$, -COOH, $-SO_3H$, $-O-PO_3H$, $-SO_2-R^4$, oder einen gegebenenfalls substituierten, ein-, zwei- oder dreiwertigen Kohlenwasserstoffrest mit 2 bis 100 Kohlenstoffatomen je Rest, der gegebenenfalls durch Gruppen, die ausgewählt werden aus -C(O)-, -C(O)-O-, $-C(O)-NR^3-$, $-NR^3-$, -O-, -S-, unterbrochen sein kann, bedeuten;

$\mathbf{A^1}$ einen Rest der allgemeinen Formel (X)

$$-R^6-B^1-R^6- \quad (X),$$

wobei

$\mathbf{R^6}$ die vorstehenden Bedeutungen hat und die Reste $\mathbf{R^6}$ an zwei beliebigen, chemisch sinnvollen Positionen am Heterocyclus sitzen können und

$\mathbf{B^1}$ einen Rest der allgemeinen Formeln (XI)

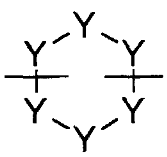
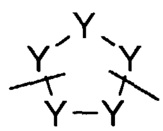
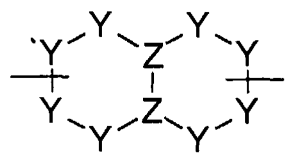
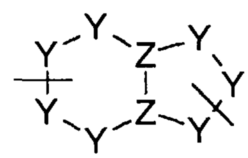

(XI)

bedeuten, wobei

**Y und Z** die oben angegebenen Bedeutungen besitzen, mit der Maßgabe, daß der Heterocyclus eine chemisch sinnvolle Struktur hat und mindestens ein Stickstoffatom enthält und gesättigt, ungesättigt oder aromatisch sein kann;

$\mathbf{A^2}$ einen Rest der allgemeinen Formel (XII)

$$-R^6-\underset{\underset{R^6}{|}}{B^2}-R^6- \quad (XII),$$

wobei

$\mathbf{R^6}$ die vorstehenden Bedeutungen hat und die Reste $\mathbf{R^6}$ an drei beliebigen, chemisch sinnvollen Positionen am Heterocyclus sitzen können und

$\mathbf{B^2}$ einen Rest der allgemeinen Formeln (XIII)

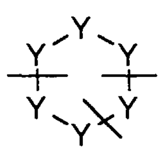
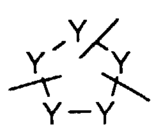
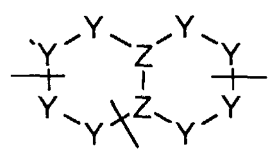
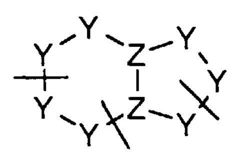

(XIII)

bedeuten, wobei

**Y und Z** die oben angegebenen Bedeutungen besitzen, mit der Maßgabe, daß der Heterocyclus eine chemisch sinnvolle Struktur hat und mindestens ein Stickstoffatom enthält und gesättigt, ungesättigt oder aromatisch sein kann; mit der Maßgabe, daß mindestens eine Gruppe, die ausgewählt wird aus **A**, $\mathbf{A^1}$ oder $\mathbf{A^2}$, pro Molekül enthalten ist und daß in jeder Gruppe A, $A^1$ bzw. $A^2$ mindestens eine, zwei bzw. drei Einheit(en) der allgemeinen Formel (I) enthalten sind.

In $\mathbf{R^6}$ ist entweder mindestens eine Gruppe der allgemeinen Formeln (VI) und mindestens eine Gruppe der allgemeinen Formeln (VII) enthalten oder mindestens eine Gruppe der allgemeinen Formeln (VI) vorhanden, und $\mathbf{R^6}$ ist an ein Stickstoffatom im Heterocyclus **B**, bzw. $\mathbf{B^1}$, bzw. $\mathbf{B^2}$ gebunden.

Die Organosiloxanverbindungen besitzen vorzugsweise ein durchschnittliches Molekulargewicht von mindestens 500, insbesondere mindestens 5 000 g/mol und vorzugsweise höchstens 1 000000, insbesondere höchstens 250000 g/mol. Vorzugsweise besitzen die Organosiloxanverbindungen eine Viskosität von mindestens 10, insbesondere mindestens 20 und vorzugsweise höchstens 100000, insbesondere höchstens 1 000000 $mm^2/s$ bei 25° C. Die erfindungsgemäßen Organosiloxanverbindungen können auch fest oder wachsartig sein.

Beispiele für die Reste $\mathbf{R^2}$ sind Alkylreste, wie der Methyl-, Ethyl, n-Propyl-, iso-Propyl-, 1-n-Butyl-, 2-n-Butyl, tert.-Butyl-, n-Pentyl, iso-Pentyl, neo-Pentyl, tert-Pentylrest; Hexylreste, wie der n-Hexylrest; Heptylreste, wie der n-Heptylrest, Octylreste, wie der n-Octylrest und iso-Octylreste, wie der 2,2,4-Trimethylpentylrest; Nonylreste, wie der n-Nonylrest; Decylreste wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylrest, wie der o-, m-, p-Tolylreste; Xylylreste und Ethylphenylreste; und Aralkylreste, wie der Benzylrest oder der Phenylethylrest. Bevorzugt sind der Methylrest, der n-Octylrest, der n-Dodecylrest und der n-Octadecylrest.

Beispiele für halogenierte Reste $\mathbf{R^2}$ sind Halogenalkylrest, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Alkylreste $\mathbf{R^4}$ sind Methyl-, Ethyl-, n-Propyl-, iso-Propyl-, 1-n-Butyl, 2-n-Butyl, iso-Butyl, tert-Butylreste. Bevorzugt sind der Methyl- und Ethylrest. Beispiele für Alkylreste $\mathbf{R^4}$, die durch Ethersauerstoffe substituiert sind, sind der Methoxy-ethyl- und der Ethoxyethylrest.

Bevorzugt ist der Rest $\mathbf{R^4}$ ein Wasserstoffatom, eine Methyl-, Ethyl-, Butyl- oder Cyclohexylgruppe.

Der Rest $\mathbf{R^5}$ ist bevorzugt ein Alkylenrest, besonders bevorzugt ein Ethylen-, Propylen- oder ein Butylenrest.

Bevorzugt ist der Rest $\mathbf{R^3}$, ein Wasserstoffatom, eine Methyl- oder Butylgruppe.

Beispiele für Reste $\mathbf{R^6}$ sind substituierte Alkylenreste der Formeln

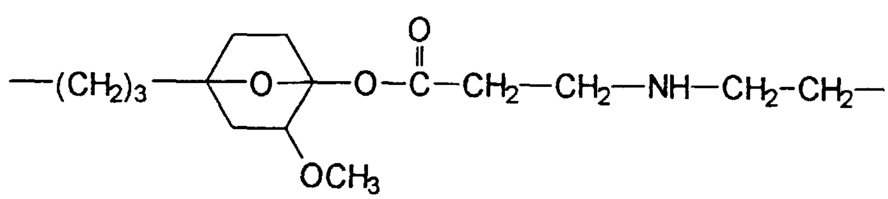

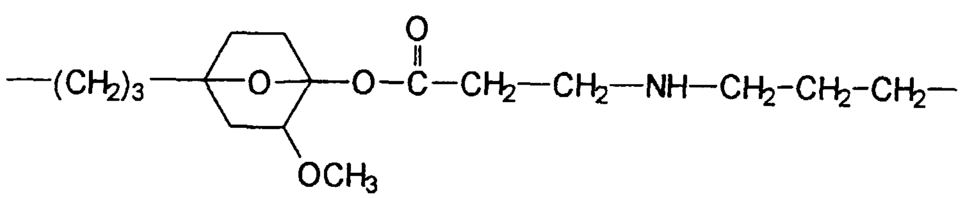

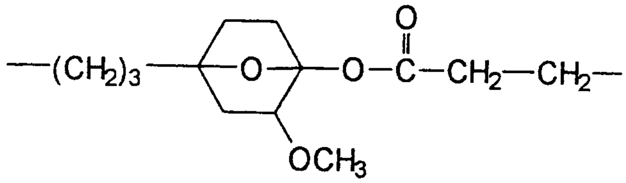

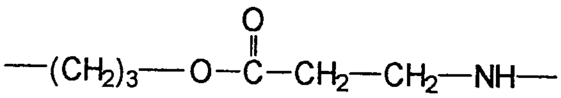

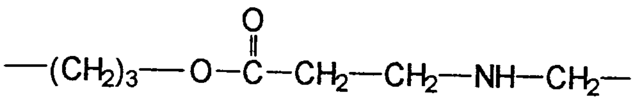

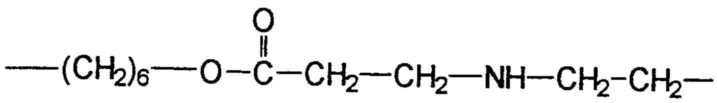

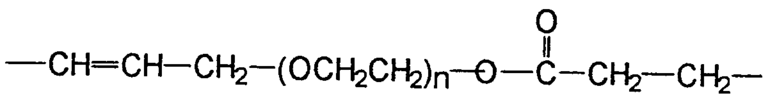

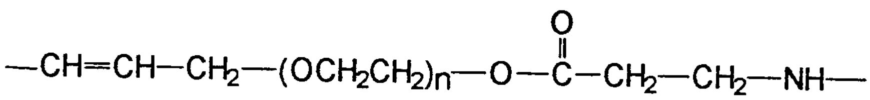

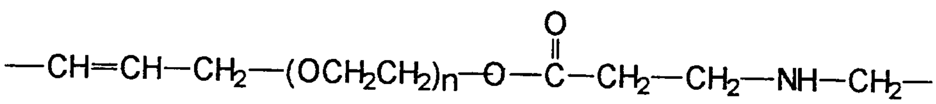

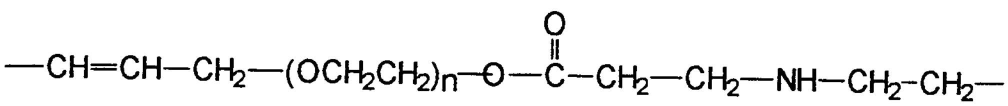

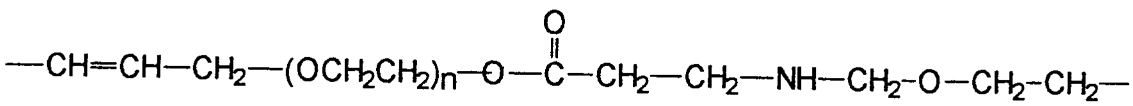

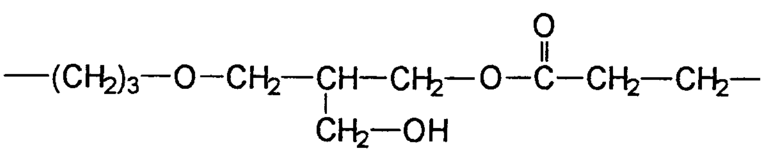

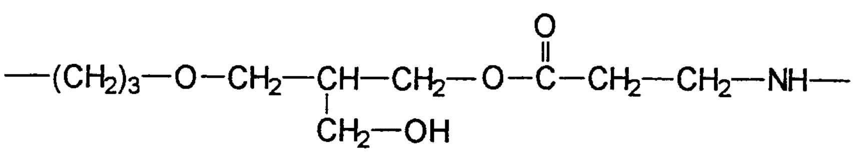

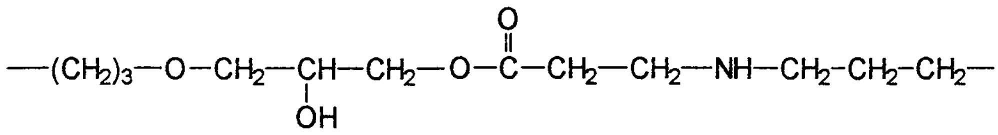

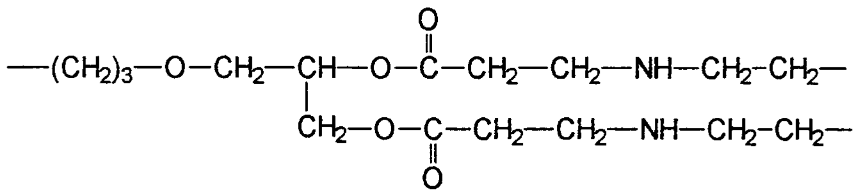

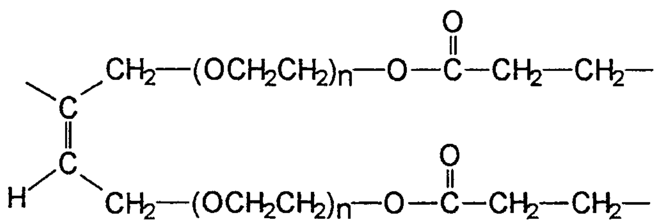

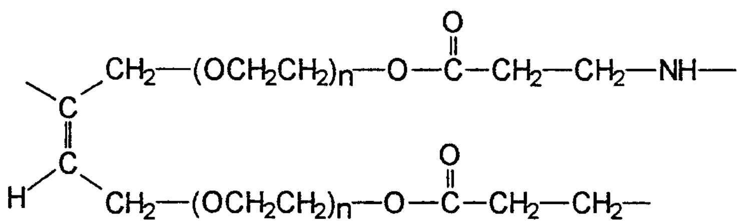

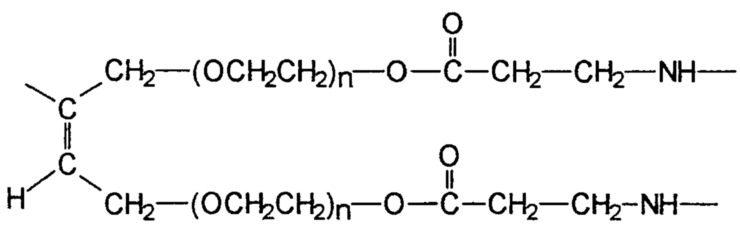

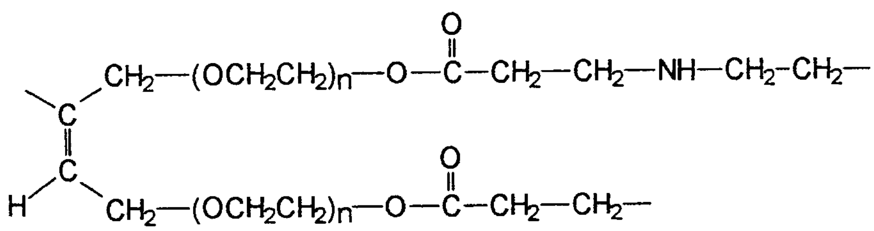

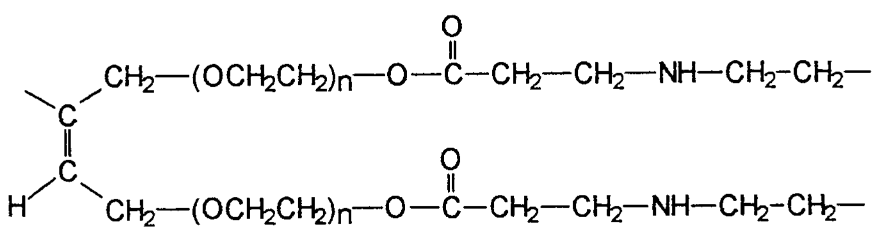

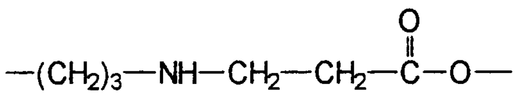

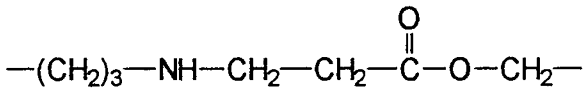

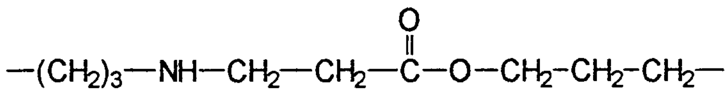

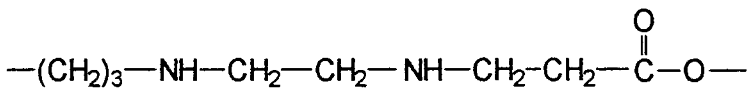

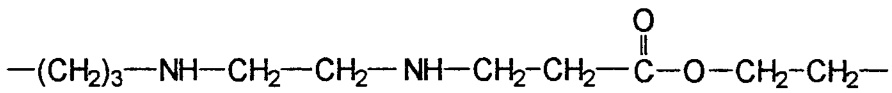

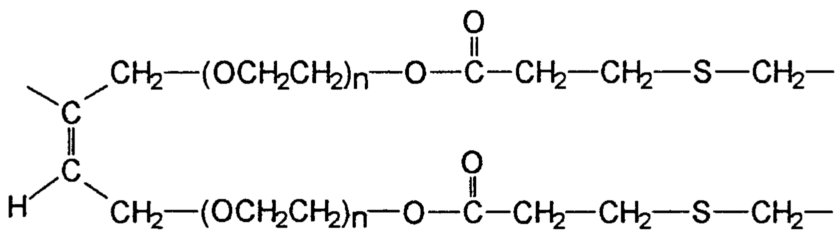

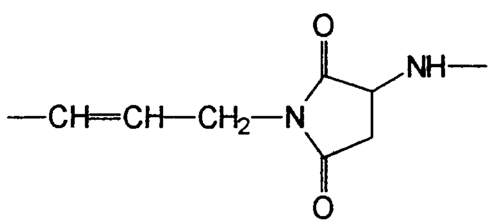

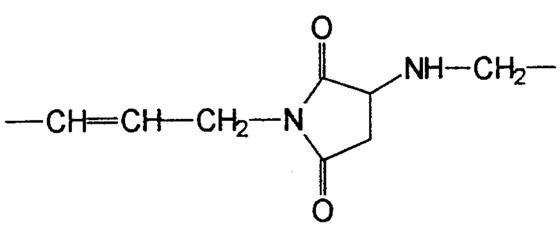

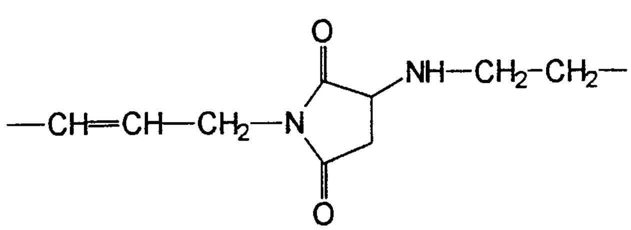

**n** weist vorzugsweise ganzzahlige Werte von 0 bis 30, insbesondere von 2 bis 10 auf.

Besonders bevorzugt als Reste $\mathbf{R^6}$ sind solche der Formeln

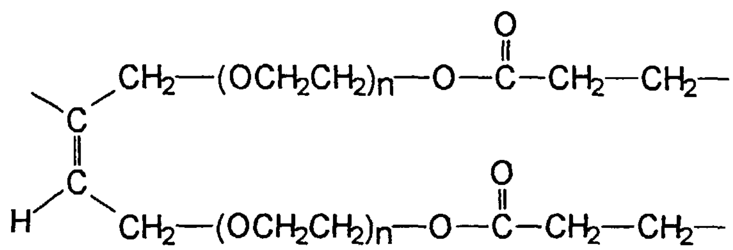

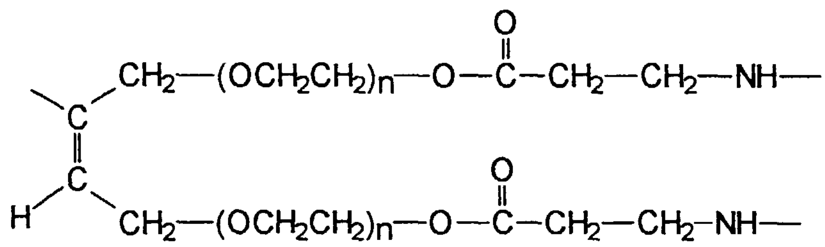

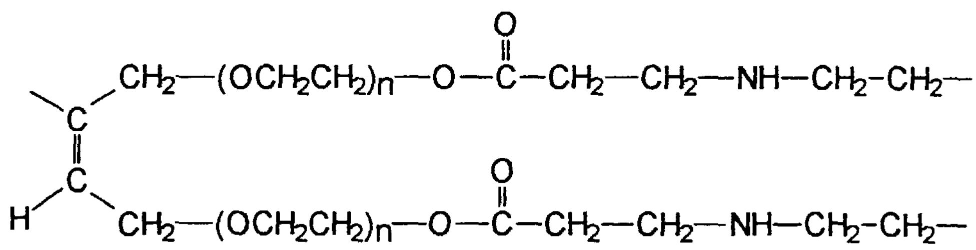

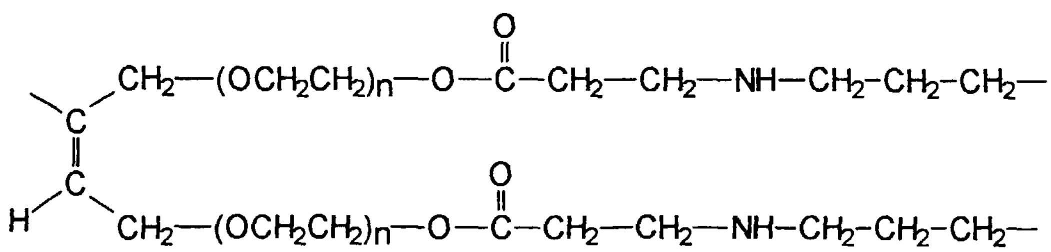

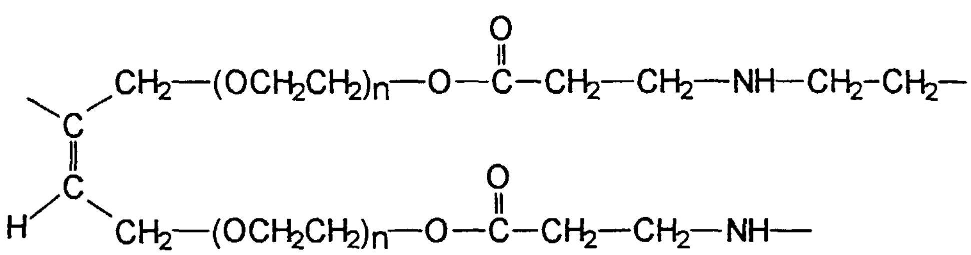

Vorzugsweise weist darin **n** ganzzahlige Werte von 2 bis 5 auf.

Bevorzugt ist der Rest $\mathbf{R^7}$ ein Wasserstoffatom oder eine $C_1$- bis $C_{10}$- Alkylgruppe, besonders bevorzugt ein Wasserstoffatom oder eine Methylgruppe.

Die Stickstoff im Ring aufweisende, Heterocyclen enthaltenden Organosiloxanverbindungen enthalten vorzugsweise weitere Siloxaneinheiten, an die keine Heterocyclen gebunden sind.

Die Stickstoff im Ring aufweisende, Heterocyclen enthaltenden Organosiloxanverbindungen können aus leicht zugänglichen Ausgangsstoffen über Michaeladditionen und analoge Reaktionen hergestellt werden. Michaeladdition an Siloxanverbindungen sind beispielsweise aus US-A-4,606,933 bekannt.

Gegenstand der Erfindung ist weiterhin ein Verfahren zur Herstellung von Stickstoff im Ring aufweisende, Heterocyclen enthaltenden Organosiloxanverbindungen, die mindestens eine Einheit der allgemeinen Formel (I) enthalten, bei dem Organosiliciumverbindungen, die Einheiten der allgemeinen Formel

$$W_aR^2{}_bSiX_cO_{[4-(a+b+c)]/2} \qquad (XIV),$$

enthalten, wobei **R²**, **X**, **a**, **b** und **c** die oben genannten Bedeutungen haben und

**W** ein Rest der allgemeinen Formeln (XV)

$$-R^8-(NR^4-CH_2CH_2)_d-NR^4{}_2,\ -R^8-SH, \qquad (XV),$$

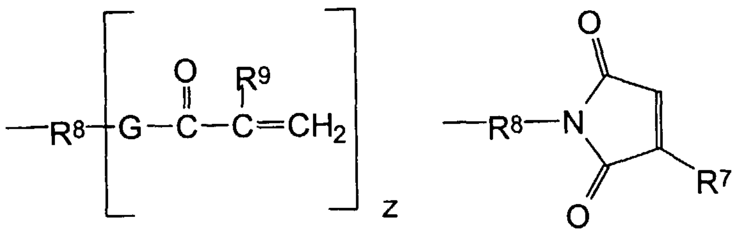

ist, wobei

| | |
|---|---|
| **R⁷** und **R⁴** | die vorstehend dafür angegebene Bedeutung haben, |
| **G** | einen Rest der Formeln -O- oder -NR³-, |
| **d** | die Werte 0 oder eine ganze Zahl von 1 bis 8, |
| **z** | je nach Wertigkeit von **R⁸** die Werte 1 oder 2, |
| **R⁹** | ein Wasserstoffatom oder eine Methylgruppe und |
| **R⁸** | ein zwei- oder dreiwertiger, gegebenenfalls substituierter Kohlenwasserstoffrest mit 2 bis 100 Kohlenstoffatomen je Rest, der gegebenenfalls durch Gruppen, die ausgewählt werden aus -C(O)-, -C(O)-O-, -C(O)-NR³-, -NR³-, -O-, -S-, unterbrochen sein kann, mit der Maßgabe, daß pro Molekül mindestens eine Einheit **W** enthalten ist, |

mit heterocyclischen Verbindungen, die ausgewählt werden aus Verbindungen der allgemeinen Formeln (XVI), (XIX) und (XX),

a)

$$B-(R^8)_u-R^{10} \qquad (XVI),$$

wobei

| | |
|---|---|
| **B** und **R⁸** | die oben angegebenen Bedeutungen haben, |
| **u** | die Werte 0 oder 1 und |
| **R¹⁰** | ein Wasserstoffatom, eine Gruppe -SH oder einen Rest der allgemeinen Formeln (XVII) oder (XVIII) |

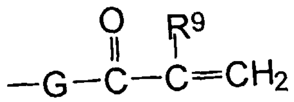

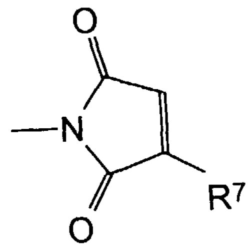

(XVII),

$$-(NR^4\text{-}CH_2\text{-}CH_2)_d\text{-}NR^4_2 \qquad \text{(XVIII)},$$

bedeutet, wobei

**d, $R^4$, $R^9$ und G** die oben dafür angegebenen Bedeutungen haben, mit der Maßgabe, daß pro Molekül entweder mindestens eine Gruppe -SH, oder ein Rest der allgemeinen Formeln (XVII) oder (XVIII) vorhanden ist, oder **Y** mindestens einmal gleich N-H ist;

b)

$$R^{10}\text{-}(R^8)_u\text{-}B^1\text{-}(R^8)_u\text{-}R^{10} \qquad \text{(XIX)},$$

wobei

**$B^1$, u, $R^8$ und $R^{10}$** die oben angegebenen Bedeutungen haben, mit der Maßgabe, daß pro Molekül
entweder mindestens zwei Gruppen der allgemeinen Formel (XVII) oder
mindestens zwei Gruppen ausgewählt aus der Gruppe -SH und der allgemeinen Formel (XVIII) oder
mindestens eine Gruppe ausgewählt aus der Gruppe -SH und der allgemeinen Formel (XVIII) und Y mindestens einmal gleich N-H oder
Y mindestens zweimal gleich N-H

enthalten sind,

c)

$$R^{10}\text{-}(R^8)_u\text{-}\underset{\displaystyle (R^8)_u\text{-}R^{10}}{\overset{|}{B^2}}\text{-}(R^8)_u\text{-}R^{10} \qquad \text{(XX)},$$

wobei

**$B^2$, u, $R^8$ und $R^{10}$** die oben angegebenen Bedeutungen haben, mit der Maßgabe, daß pro Molekül
entweder mindestens drei Gruppen der allgemeinen Formel (XVII) oder
mindestens drei Gruppen, ausgewählt aus der Gruppe -SH und der allgemeinen Formel (XVIII) oder
mindestens zwei Gruppen, ausgewählt aus der Gruppe -SH und der allgemeinen Formel (XVIII) und Y mindestens einmal gleich N-H oder
mindestens eine Gruppe, ausgewählt aus der Gruppe -SH und der allgemeinen Formel (XVIII) und Y mindestens zweimal gleich NH oder
Y mindestens dreimal gleich N-H

enthalten sind;

umgesetzt werden.

Die Umsetzung kann beispielsweise in Substanz, Lösung oder Emulsion erfolgen.

Bei dem Verfahren können bekannte Verbindungen, die Michaelreaktion ähnliche Reaktionen katalysieren, eingesetzt werden. Beispiele sind Eisessig, Zinn(IV)chlorid, Natriummethylat und Alkaliamide.

Bei dem Verfahren werden pro Mol des Restes **E** in der eingesetzten Organosiliciumverbindung vorzugsweise mindestens 0,001 mol, insbesondere mindestens 0,01 mol, besonders bevorzugt mindestens 0,1 mol und vorzugsweise höchstens 10 mol, insbesondere höchstens 3 mol und besonders bevorzugt höchstens 2 mol Reste der Formeln -SH und der allgemeinen Formeln (XVIII) und (XIX), bzw. Y = NH verwendet.

Bei dem Verfahren können organische Lösungsmittel und Wasser oder Mischungen aus beiden mitverwendet werden. Beispiele für organische Lösungsmittel sind Toluol, Xylol, THF, n-Butylacetat, Isopropanol und Dimethoxyethan. Vorzugsweise wird mitverwendetes organisches Lösungsmittel nach der Reaktion entfernt.

Das Verfahren wird vorzugsweise bei dem Druck der umgebenden Atmosphäre, also etwa bei 1020 hPa (abs.), durchgeführt. Sie können aber auch bei höheren oder niedrigeren Drücken durchgeführt werden. Ferner wird das Verfahren vorzugsweise bei einer Temperatur von mindestens 25 °C bis 150 °C, insbesondere höchstens 120° C, besonders bevorzugt höchstens 100 °C, durchgeführt.

Bevorzugt ist $\mathbf{R}^9$ ein Wasserstoffatom.

Bevorzugt ist $\mathbf{R}^8$ ein gesättigter oder ungesättigter Alkylenrest oder ein Rest der Formel

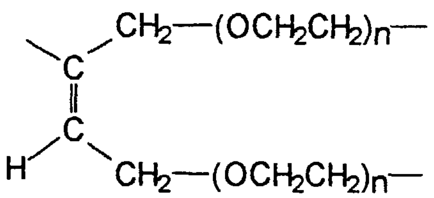

Besonders bevorzugt ist obiger Rest mit n = 2 bis 10.

Beispiele für Verbindungen der allgemeinen Formel (XVI) sind 4-Amino-antipyrin, 2-Amino-benzimidazol, 2-Amino-benzothiazol, 1-Amino-benzotriazol, 4-Amino-1-benzyl-piperidin, 2-Amino-5-brom-pyridin, 4-Aminochinaldin, Amino-chinoline, 2-Amino-4-chlor-6-methyl-pyrimidin, Amino-chlor-pyridine, Amino-dichlorpyridine, Amino-dichlor-pyrimidine, Amino-dimethyl-pyrimidine, 4-(2-Aminoethyl)-morpholin, 1-(2-Aminoethyl)-piperazin, 1-(2-Aminoethyl)-piperidin, 2-(2-Aminoethyl)-pyridin, N-(2-Aminoethyl)pyrrolidin, Amino-hydroxy-chinoline, Amino-hydroxy-pyridine, Amino-indole, 2-Amino-5-mercapto-1,3,4-thiadiazol, 3-Amino-5-mercapto-1,2,4-triazol, Amino-methyl-isothiazole, Amino-methyl-isoxazol, Amino-methyl-nitro-pyridine, Amino-methyl-pyridine, 4-(Aminomethyl)-piperidin, 1-Amino-4-methylpiperazin, Amino-nicotinsäure, Amino-nicotinsäureamid, Amino-phthalimide, 4-Amino-piperidin-1-carbonsäure-ethylester, 1-(3-Aminopropyl)-imidazol, N-(3-Aminopropyl)-morpholin N-(3-Aminopropyl)-pyrrolidinon, Aminopyrazin, Amino-pyrazol, Aminopyridin, Aminopyrimidin, 4-Amino-2,2,6,6,-tetramethylpiperidin, 4-Amino-2,2,6,6-tetramethyl-piperidin-1-oxyl, Amino-tetrazol, Aminothiazol, Amino-triazol, Aminourazil, Morpholin, Pyrrolidin, Piperidin, insbesondere:

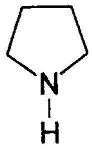
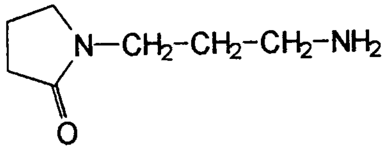
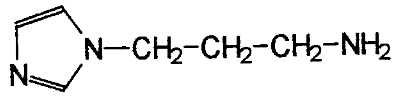
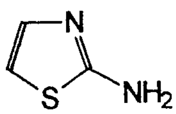
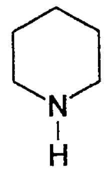
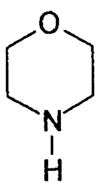
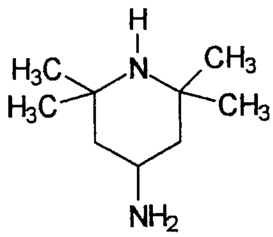
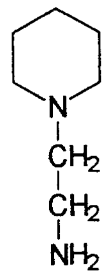
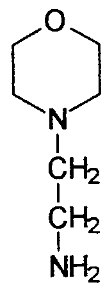
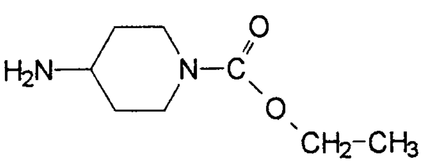
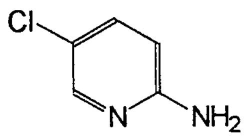
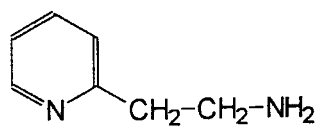
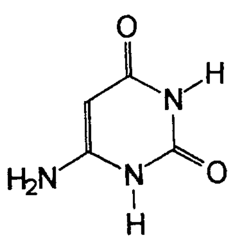
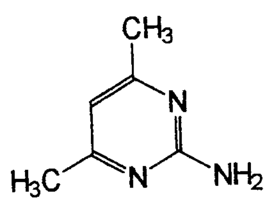
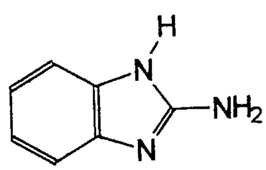
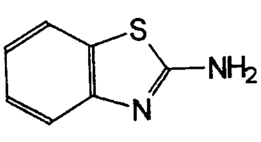
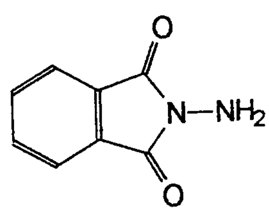
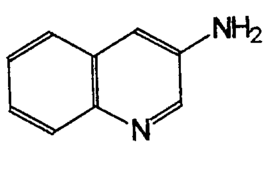

Beispiele für Verbindungen der allgemeinen Formel (XIX) sind 1-(2-Aminoethyl)-piperazin, N,N'-Bis(3-aminopropyl)-piperazin, 4,5-Diamino-2,6-dimercaptopyrimidin, 4-Aminomethyl-piperidin, 4,5-Diamino-6-hydroxy-2-mercaptopyrimidin, 2,4-Diamino-6-methyl-1,3,5-triazin, 2,6-Diaminopurin, Diaminopyridine, Diaminopyrimidine, 2,6-Diamino-4-pyrimidinon, 3,5-Diamino-1,2,4-triazol, Piperazin, insbesondere:

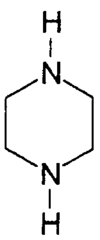
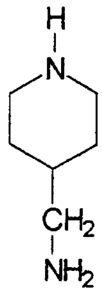
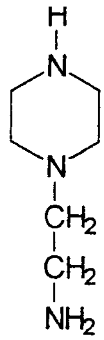
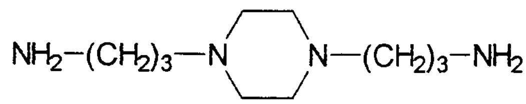

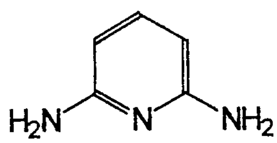
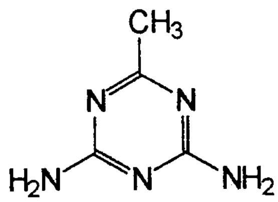
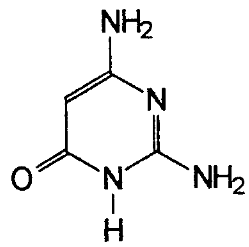

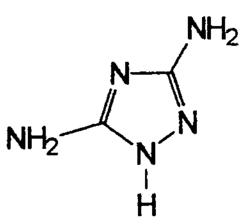
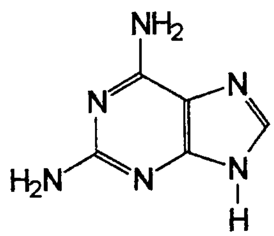

Bevorzugte Beispiele für Verbindungen der allgemeinen Formel (XX) sind

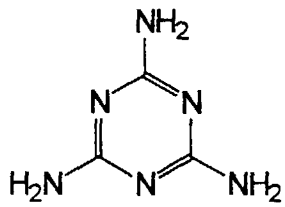

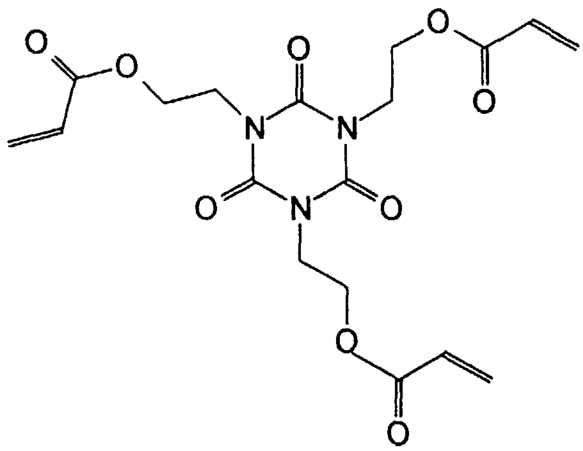

Die nach dem vorstehenden Verfahren erhaltenen, Stickstoff im Ring aufweisenden, Heterocyclen enthaltenden Organosiloxanverbindungen können mit heterocyclenfreien Organopolysiloxanen, ausgewählt aus der Gruppe bestehend aus linearen, endständige Triorganosiloxygruppen aufweisenden Organopolysiloxanen, linearen, endständige Hxdroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der allgemeinen Formel (XXI)

$$R^2_3SiO(SiR^2_2O)_rSiR^2_3, \qquad (XXI),$$

wobei

**$R^2$** die vorstehend angegebenen Bedeutungen hat und
**r** 0 oder eine ganze Zahl im Wert von 1 bis 1500 ist, eingesetzt.

Vorzugsweise werden als lineare, endständige Hydroxylgruppen aufweisende Organopolysiloxane solche der allgemeinen Formel (XXII)

$$HO(SiR^2_2)_sH \qquad (XXII),$$

wobei

**$R^2$** die oben dafür angegebenen Bedeutungen hat und
**s** eine ganze Zahl im Wert von 1 bis 1500 ist, eingesetzt.

Vorzugsweise werden als cyclische Organopolysiloxane solche der allgemeinen Formel (XXIII)

$$(R^2 2SiO)_t \quad (XXIII),$$

wobei

**$R^2$** die oben dafür angegebenen Bedeutungen hat und
**t** eine ganze Zahl von 3 bis 12 ist, eingesetzt.

Vorzugsweise werden als Mischpolymerisate solche aus Einheiten der allgemeinen Formeln (XXIV) und (XXV)

$$R^2{}_2SiO \quad (XXIV),$$

$$R^2SiO3/2 \quad (XXV),$$

wobei

**$R^2$** die oben dafür angegebenen Bedeutungen hat, eingesetzt.

Die Mengenverhältnisse der bei der gegebenenfalls durchgeführten Equilibrierung eingesetzten, heterocyclenfreien Organopolysiloxane und der Heterocyclen enthaltenden Organopolysiloxane werden lediglich durch den gewünschten Anteil der heterocyclischen Gruppen in den bei der gegebenenfalls durchgeführten Equilibrierung erzeugten Organopolysiloxanen und durch die gewünschte mittlere Kettenlänge bestimmt.
Bei der Equilibrierung werden sauere oder bevorzugt basische Katalysatoren, welche die Equilibrierung fördern, eingesetzt. Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate. Bevorzugt sind Ammoniumhydroxide, welche in Mengen von 50 bis 10 000 Gew. ppm, insbesondere 500 bis 2000 ppm, jeweils bezogen auf das Gesamtgewicht der eingesetzten Organosiliciumverbindungen, verwendet werden.
Vor dem Aufarbeiten des bei dem Equilibrieren erhaltenen Gemisches kann der Katalysator unwirksam gemacht werden.
Die Umsetzung von acrylierten Organosiliciumverbindungen mit Aminogruppen aufweisenden Heterocyclen ist bevorzugt.
Wird z.B. eine Aminogruppen aufweisende heterocyclische Verbindung unter-stöchiometrisch auf (Meth)acrylatgruppen eingesetzt, können die Heterocyclen enthaltenden Organosiloxanverbindungen über die verbleibenden (Meth)acrylatgruppen radikalisch oder über eine Hydrosilylierung vernetzt werden.
Verbleiben primäre, sekundäre oder tertiäre Aminogruppen in den Heterocyclen enthaltenden Organosiloxanverbindungen, so können diese gegebenenfalls protoniert oder acyliert werden.
Die Heterocyclen enthaltenden Organosiloxanverbindungen werden bei der Herstellung nur geringen thermischen Belastungen ausgesetzt und können deshalb in reiner Form bereitgestellt werden. Die Organosiloxanverbindungen können ohne
Übergangsmetall-Katalysatoren hergestellt werden und deshalb frei von Übergangsmetallen sein. Die Organosiloxanverbindungen ermöglichen den Einbau von reaktiven Gruppen.
Die Heterocyclen enthaltenden Organosiloxanverbindungen zeichnen sich zusätzlich durch ihre einfache variable Darstellungsweise und die Möglichkeit des gezielten Aufbaus teilweise vernetzter Strukturelemente aus. Die Organosiloxanverbindungen-Polymere zeichnen sich durch eine geringe Vergilbungsneigung sowie durch ihre Detergentienbeständigkeit aus.
Die Organosiliciumverbindungen können zur Behandlung von Textilfasern, textilen Flächengebilden, wie z.B. Geweben, Maschenwaren oder Vliesen und Leder eingesetzt werden, denen sie guten Weichgriff verleihen. Ferner dienen sie als UV-, Licht-, Hitze- und Oxidationsstabilisatoren in synthetischen Polymeren.
In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa und bei Raumpemperatur, also 20°C bzw. einer Temperatur, die sich beim Zusammengeben der Reaktanden bei Raumtemperatur ohne zusätzliche Kühlung oder Heizung einstellt, durchgeführt. Alle in den Beispielen angeführten Viskositätsangaben sollen sich auf eine Temperatur von 25°C beziehen.

## Beispiel 1

50,0 g ($2,1 \times 10^{-2}$ mol Acrylatgruppen) eines Diacrylatgruppen endterminierten Polydimethylsiloxanes der mittleren Kettenlänge 100 mit einer Viskosität von 580 $mm^2/s$ werden mit 2,7 g ($2,1 \times 10^{-2}$ mol $NH_2$) 1-(2-Aminoethyl)pipe-

razin und 50 g 2-Propanol bei 80°C für drei Stunden gerührt.

Nach dem Einengen der Lösung im Vakuum (1 mbar) bei 60°C bis zur Gewichtskonstanz erhält man 51,6 g (97,9 % d. Th.) eines klaren, leicht gelben Öles der Viskosität 5300 $mm^2/s$.

**Beispiel 2**

40,0 g ($2{,}4x10^{-2}$ mol Acrylatgruppen) eines Trimethylsiloxy-, Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 68 und einer Viskosität von 330 $mm^2/s$ werden mit 2,1 g ($2{,}4x10^{-2}$ mol NH) Piperidin bei 80°C für fünf Stunden gerührt. Man erhält 42 g ( 99,7 % d. Th.) eines gelben Öles mit einer Viskosität von 410 $mm^2/s$.

**Beispiel 3**

40,0 g ($2{,}4x10^{-2}$ mol Acrylatgruppen) eines Trimethylsiloxy-, Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 68 und einer Viskosität von 330 $mm^2/s$ werden in 20 g 2-Propanol gelöst, mit 2,9 g ($2{,}4x10^{-2}$ mol $NH_2$) 2-(2-Aminoethyl)pyridin versetzt und bei 80°C für drei Stunden gerührt. Anschließend wird das 2-Propanol bei einem Vakuum von einem mbar und 60°C bis zur Gewichtskonstanz entfernt, wobei 41,9 g (97,7 % d. Th.) eines leicht gelben Öles mit einer Viskosität von 2300 $mm^2/s$ zurückbleiben.

**Beispiel 4**

60,0 g ($3{,}6x10^{-2}$ mol Acrylatgruppen) eines Trimethylsiloxy-, Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 68 und einer Viskosität von 330 $mm^2/s$ werden in 30 g 2-Propanol gelöst, mit 5,6 g (3,6x10-2 mol $NH_2$) 4-Amino-2,2,6,6-tetramethylpiperidin versetzt und bei 80°C für drei Stunden gerührt. Anschließend wird das 2-Propanol bei einem Vakuum von einem mbar und 60°C bis zur Gewichtskonstanz entfernt, wobei 65,0 g (99,1 % d. Th.) eines leicht gelben Öles mit einer Viskosität von 770 $mm^2/s$ zurückbleiben.

**Beispiel 5**

60,0 g ($3{,}6x10^{-2}$ mol Acrylatgruppen) eines Trimethylsiloxy-, Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 68 und einer Viskosität von 330 $mm^2/s$ werden in 30 g 2-Propanol gelöst, mit 3,1 g ($3{,}6x10^{-2}$ mol NH) Morpholin versetzt und bei 80°C für drei Stunden gerührt. Anschließend wird das 2-Propanol bei einem Vakuum von einem mbar und 60°C bis zur Gewichtskonstanz entfernt, wobei 62,5 g (99,0 % d. Th.) eines leicht gelben Öles mit einer Viskosität von 980 $mm^2/s$ zurückbleiben.

**Beispiel 6**

50,0 g ($3{,}3x10^{-2}$ mol Acrylatgruppen) eines Trimethylsiloxy-, Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 64 und einer Viskosität von 270 $mm^2/s$ werden in 20 g 2-Propanol gelöst, mit 4,7 g ($3{,}3x10^{-2}$ mol $NH_2$) N-(3-Aminopropyl)-2-pyrolidinon versetzt und bei 80°C für drei Stunden gerührt. Anschließend wird das 2-Propanol bei einem Vakuum von einem mbar und 60°C bis zur Gewichtskonstanz entfernt, wobei 53,8 g (99,0 % d. Th.) eines gelben Öles mit einer Viskosität von 6930 $mm^2/s$ zurückbleiben.

**Beispiel 7**

30,0 g ($6{,}3x10^{-2}$ mol Acrylatgruppen) eines Dimethylsiloxy- und Alkenyldiacrylat-dimethylsiloxygruppen ($-O-SiMe_2-(RC=CRH)$;
R= $-CH_2-O-(CH_2-CH_2-O)_{2,7}-C(O)CH=CH_2$) aufweisenden Polydimethylsiloxans der mittleren Kettenlänge 13 und einer Viskosität von 144 $mm^2/s$ werden zu einer Lösung von 8,1 g ($6{,}3x10^{-2}$ mol $NH_2$) 1-(2-Aminoethyl)-piperazin in 19 g 2-Propanol bei 70°C innerhalb 1,5 h zugegeben und anschließend bei 70°C für weitere zwei Stunden gerührt. Anschließend wird das 2-Propanol bei einem Vakuum von einem mbar und 60°C bis zur Gewichtskonstanz entfernt, wobei 37,5 g (98,4 % d. Th.) eines gelben Öles mit einer Viskosität von 6620 $mm^2/s$ zurückbleiben.

**Beispiel 8**

30,0 g ($6{,}3 \times 10^{-2}$ mol Acrylatgruppen) eines Dimethylsiloxy- und Alkenyldiacrylat-dimethylsiloxygruppen (-O-$SiMe_2$-(RC=CRH);
R= $-CH_2-O-(CH_2-CH_2-O)_{2,7}-C(O)CH=CH_2$) aufweisenden Polydimethylsiloxans der mittleren Kettenlänge 13 und einer Viskosität von 144 $mm^2/s$ werden zu einer Lösung von 7,8 g ($6{,}0 \times 10^{-2}$ mol $NH_2$) 1-(2-Aminoethyl)-piperazin in 19 g 2-Propanol bei 70°C innerhalb 1,5 h zugegeben und anschließend bei 70°C für weitere zwei Stunden gerührt. Anschließend wird das 2-Propanol bei einem Vakuum von einem mbar und 60°C bis zur Gewichtskonstanz entfernt, wobei 37,1 g (98,1 % d. Th.) eines gelben Öles mit einer Viskosität von 7100 $mm^2/s$ zurückbleiben.

**Beispiel 9**

30,0 g ($6{,}3 \times 10^{-2}$ mol Acrylatgruppen) eines Dimethylsiloxy- und Alkenyldiacrylat-dimethylsiloxygruppen (-O-$SiMe_2$-(RC=CRH);
R= $-CH_2-O-(CH_2-CH_2-O)_{2,7}-C(O)CH=CH_2$) aufweisenden Polydimethylsiloxans der mittleren Kettenlänge 13 und einer Viskosität von 144 $mm^2/s$ werden in 20 g 2-Propanol gelöst, mit 9,8 g ($6{,}3 \times 10^{-2}$ mol $NH_2$) 4-Amino-2,2,6,6-tetramethylpiperidin versetzt und bei 70°C für drei Stunden gerührt. Anschließend wird das 2-Propanol bei einem Vakuum von einem mbar und 60°C bis zur Gewichtskonstanz entfernt, wobei 39,1 g (98,2 % d. Th.) eines gelben Öles mit einer Viskosität von 582 $mm^2/s$ zurückbleiben.

**Beispiel 10**

30,0 g ($6{,}3 \times 10^{-2}$ mol Acrylatgruppen) eines Dimethylsiloxy- und Alkenyldiacrylat-dimethylsiloxygruppen (-O-$SiMe_2$-(RC=CRH);
R= $-CH_2-O-(CH_2-CH_2-O)_{2,7}-C(O)CH=CH_2$) aufweisenden Polydimethylsiloxans der mittleren Kettenlänge 13 und einer Viskosität von 144 $mm^2/s$ werden in 20 g 2-Propanol gelöst, mit 8.2 g ($6{,}3 \times 10^{-2}$ mol $NH_2$) 4-(2-Aminoethyl)morpholin versetzt und bei 70°C für drei Stunden gerührt. Anschließend wird das 2-Propanol bei einem Vakuum von einem mbar und 60°C bis zur Gewichtskonstanz entfernt, wobei 37,8 g (99,0 % d. Th.) eines gelben Öles mit einer Viskosität von 624 $mm^2/s$ zurückbleiben.

## Patentansprüche

1. Stickstoff im Ring aufweisende, Heterocyclen enthaltende Organosiloxanverbindungen, bei denen die Heterocyclen über zwei- oder mehrwertige Reste, die eine Einheit der allgemeinen Formel (I)

$$-\overset{\overset{\displaystyle O}{\|}}{C}-CHR-CR_2-E- \qquad (I),$$

enthalten, worin

| | |
|---|---|
| **E** | die Reste -O-, -S-, $-NR^1-$ oder -N=, wobei |
| **R und R¹** | jeweils ein Wasserstoffatom oder einen $C_1$- bis $C_{20}$-Kohlenwasserstoffrest, der gegebenenfalls mit Halogen-, Amin-, Ammonium- oder Mercaptogruppen substituiert ist und gegebenenfalls durch Gruppen, die ausgewählt werden aus -C(O)-, -C(O)-O-, $-C(O)-NR^3-$, $-NR^3$, -O-, -S-, unterbrochen sein kann, bedeuten und |
| **-N=** | Bestandteil eines Heterocyclus ist, |

an ein Siliciumatom gebunden sind.

2. Organosiloxanverbindungen nach Anspruch 1, welche Einheiten enthalten, die ausgewählt werden aus Einheiten der allgemeinen Formeln (II), (III) und (IV)

$$A_aR^2_bSiX_cO_{[4-(a+b+c)]/2} \qquad (II),$$

$$(O_{(3-h-i)/2}X_iR^2_hSi)\text{-}A^1\text{-}(SiR^2_hX_iO_{(3-h-i)/2}) \qquad \text{(III)},$$

$$(O_{(3-h-i)/2}X_iR^2_h\ Si)\text{-}A^2\text{-}(SiR^2_hX_iO_{(3-h-i)/2}) \qquad \text{(IV)},$$
$$\qquad | $$
$$SiR^2_hX_iO_{(3-h-i)/2}$$

wobei

**$R^2$** einen einwertigen, zweiwertigen oder dreiwertigen Kohlenwasserstoffrest mit 1 bis 50 Kohlenstoffatomen je Rest, der gegebenenfalls mit Halogen-, Amin-, Ammonium-, Mercapto-, Acrylat- oder Maleinimidgruppen substituiert ist,

**X** ein Chloratom oder ein Rest der Formel $-OR^4$, wobei

**$R^4$** ein Wasserstoffatom oder ein Alkylrest mit 1 bis 8 Kohlenstoffatomen je Rest, der durch ein Ethersauerstoffatom substituiert sein kann, oder einen Rest der allgemeinen Formel (V)

$$-R^5\text{-}[OCH(CH_3)CH_2]_e[OCH_2CH_2]_f[O(CH_2)_4]_gOR^3 \qquad \text{(V)},$$

wobei

**$R^5$** einen zweiwertigen, Kohlenwasserstoffrest mit 2 bis 30 Kohlenstoffatomen je Rest bedeutet, der durch eine oder mehrere Gruppen, die ausgewählt werden aus Gruppen der allgemeinen Formeln (VI) und (VII)

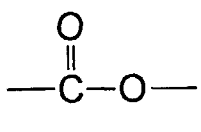 , 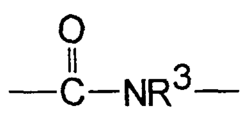 , 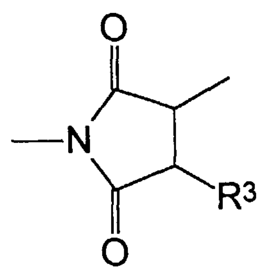 (VI)

$-NR^3-$ , $-O-$ , $-S-$

(VII)

unterbrochen sein kann, wobei

**$R^3$** einen Rest **$R^4$** oder einen Rest der Formel $-C(O)-R^4$ darstellt,

**e, f und g** jeweils eine ganze Zahl von 0-200 ist, mit der Maßgabe, daß die Summe $e + f + g \geq 1$ ist,

**a** die Werte 0, 1 oder 2,

**b** die Werte 0, 1, 2 oder 3,

**c** die Werte 0, 1, 2, oder 3 und die Summe $a + b + c \leq 4$ ist,

**h** die Werte 0, 1, 2 oder 3,

**i** die Werte 0, 1, 2 oder 3 und die Summe $h + i \leq 3$ ist,

**A** einen Rest der allgemeinen Formel (VIII)

$$-R^6\text{-}B)_z \qquad \text{(VIII)},$$

wobei

**$R^6$** einen zwei- oder dreiwertigen, Kohlenwasserstoffrest mit 2 bis 100 Kohlenstoffatomen je Rest, der durch ein oder mehrere Gruppen, die ausgewählt werden aus Gruppen der vorstehenden allgemeinen Formeln (VI) und (VII), unterbrochen sein kann,

**B** einen Rest der allgemeinen Formeln (IX)

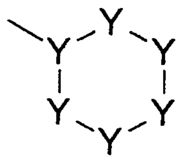
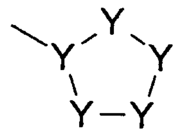
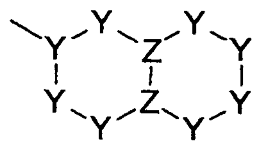
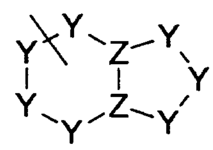

(IX)

wobei

**z** die Werte 1 oder 2 je nach Wertigkeit von **R⁶**,

**Y** ausgewählt wird aus den Gruppen der Formeln $-CR^7{}_2-$, $=CR^7-$, $-NR^7-$, =N-, -O-, =PR5, =P-, -S-, =C=O

**Z** ausgewählt wird aus den Gruppen der Formeln =C=, $=CR^7-$, =N-, =P- ist, mit der Maßgabe, daß $\mathbf{R^6}$ an einer chemisch sinnvollen Position am Heterocyclus sitzt, der Heterocyclus eine chemisch sinnvolle Struktur besitzt und mindestens ein Stickstoffatom enthält, wobei der Heterocyclus gesättigt, ungesättigt oder aromatisch sein kann,

$\mathbf{R^7}$ ein Wasserstoffatom oder einen Substituenten, der ausgewählt wird aus -F, -Cl, -Br, -I, -OH, -SCN, -NC, $-NO_2$, -CN, -SH, -NCO, $-OR^4$, -COOH, $-SO_3H$, $-O-PO_3H$, $-SO_2-R^4$, oder einen gegebenenfalls substituierten, ein-, zwei- oder dreiwertigen Kohlenwasserstoffrest mit 2 bis 100 Kohlenstoffatomen je Rest, der gegebenenfalls durch Gruppen, die ausgewählt werden aus -C(O)-, -C(O)-O-, -C(O)-$NR^3$-, $NR^3$-, -O-, -S-, unterbrochen sein kann, bedeuten;

$\mathbf{A^1}$ einen Rest der allgemeinen Formel (X)

$$-R^6-B^1-R^6- \qquad (X),$$

wobei

$\mathbf{R^6}$ die vorstehenden Bedeutungen hat und die Reste $\mathbf{R^6}$ an zwei beliebigen, chemisch sinnvollen Positionen am Heterocyclus sitzen können und

$\mathbf{B^1}$ einen Rest der allgemeinen Formeln (XI)

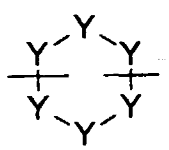
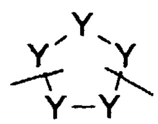
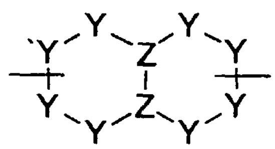
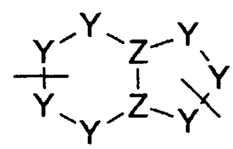

(XI)

bedeuten, wobei

**Y und Z** die oben angegebenen Bedeutungen besitzen, mit der Maßgabe, daß der Heterocyclus eine chemisch sinnvolle Struktur hat und mindestens ein Stickstoffatom enthält und gesättigt, ungesättigt oder aromatisch sein kann;

$\mathbf{A^2}$ einen Rest der allgemeinen Formel (XII)

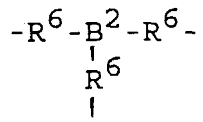

(XII),

wobei

**$R^6$** die vorstehenden Bedeutungen hat und die Reste **$R^6$** an drei beliebigen, chemisch sinnvollen Positionen am Heterocyclus sitzen können und

**$B^2$** einen Rest der allgemeinen Formeln (XIII)

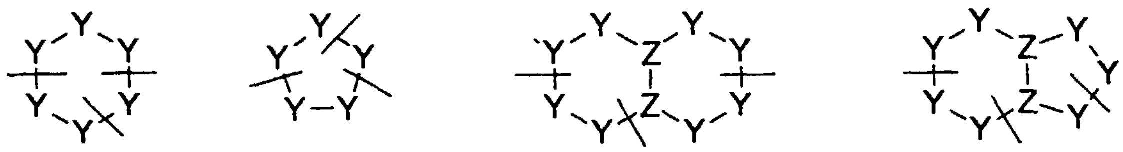

(XIII)

bedeuten, wobei

**Y und Z** die oben angegebenen Bedeutungen besitzen, mit der Maßgabe, daß der Heterocyclus eine chemisch sinnvolle Struktur hat, mindestens ein Stickstoffatom enthält und gesättigt, ungesättigt oder aromatisch sein kann; mit der Maßgabe, daß mindestens eine Gruppe, die ausgewählt wird aus **A**, **$A^1$** oder **$A^2$**, pro Molekül enthalten ist und daß in jeder Gruppe A, $A^1$ bzw. $A^2$ mindestens eine, zwei bzw. drei Einheit(en) der allgemeinen Formel (I) enthalten sind.

**3.** Organosiloxanverbindungen nach Anspruch 1 oder 2, welche ein durchschnittliches Molekulargewicht von mindestens 5000 g/mol und höchstens 1 000000 g/mol aufweisen.

**4.** Organosiloxanverbindungen nach Anspruch 1 bis 3, welche vorzugsweise weitere Siloxaneinheiten, an die keine Heterocyclen gebunden sind, enthalten.

**5.** Verfahren zur Herstellung von Stickstoff im Ring aufweisende, Heterocyclen enthaltenden Organosiloxanverbindungen, die mindestens eine Einheit der allgemeinen Formel (I) enthalten, bei dem Organosiliciumverbindungen, die Einheiten der allgemeinen Formel

$$W_aR^2_bSiX_cO_{[4-(a+b+c)]/2} \quad \text{(XIV)},$$

enthalten, wobei **$R^2$**, **X**, **a**, **b** und **c** die in Anspruch 2 genannten Bedeutungen haben und

**W** ein Rest der allgemeinen Formeln (XV)

$$-R^8-(NR^4-CH_2CH_2)_d-NR^4_2,\ -R^8-SH, \quad \text{(XV)},$$

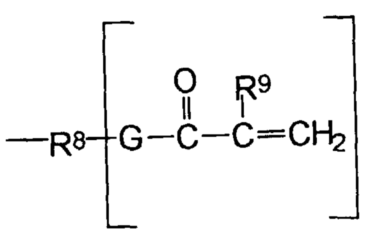

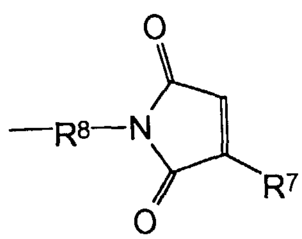

ist, wobei

**$R^7$ und $R^4$** die in Anspruch 2 genannten Bedeutungen haben,

**G** einen Rest der Formeln -O- oder $-NR^3-$,

**d** die Werte 0 oder eine ganze Zahl von 1 bis 8,

**z** je nach Wertigkeit von **$R^8$** die Werte 1 oder 2,

**$R^9$** ein Wasserstoffatom oder eine Methylgruppe und

**$R^8$** ein zwei- oder dreiwertiger, gegebenenfalls substituierter Kohlenwasserstoffrest mit 2 bis 100 Kohlenstoffatomen je Rest, der gegebenenfalls durch Gruppen, die ausgewählt werden aus -C(O)-, -C(O)-O-, -C(O)-NR$^3$-, -NR$^3$-, -O-, -S-, unterbrochen sein kann, mit der Maßgabe, daß pro Molekül mindestens eine Einheit **W** enthalten ist,
mit heterocyclischen Verbindungen, die ausgewählt werden aus Verbindungen der allgemeinen Formeln (XVI), (XIX) und (XX),

a)

$$B\text{-}(R^8)_u\text{-}R^{10} \qquad (XVI),$$

wobei

| | |
|---|---|
| **B** | die in Anspruch 2 angegebenen Bedeutungen und |
| **R$^8$** | die oben angegebenen Bedeutungen haben, |
| **u** | die Werte 0 oder 1 und |
| **R$^{10}$** | ein Wasserstoffatom, eine Gruppe -SH oder einen Rest der allgemeinen Formeln (XVII) oder (XVIII) |

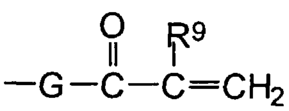

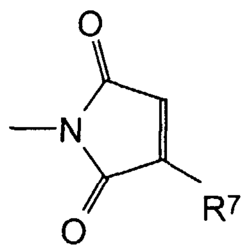

(XVII),

$$\text{-}(NR^4\text{-}CH_2\text{-}CH_2)_d\text{-}NR^4{}_2 \qquad (XVIII),$$

| | |
|---|---|
| | bedeutet, wobei |
| **d, R$^4$, R$^9$** und **G** | die oben dafür angegebenen Bedeutungen haben, mit der Maßgabe, daß pro Molekül entweder mindestens eine Gruppe -SH, oder ein Rest der allgemeinen Formeln (XVII) oder (XVIII) vorhanden ist, oder **Y** mindestens einmal gleich N-H ist; |

b)

$$R^{10}\text{-}(R^8)_u\text{-}B^1\text{-}(R^8)_u\text{-}R^{10} \qquad (XIX),$$

wobei

| | |
|---|---|
| **B$^1$** | die in Anspruch 2 genannten Bedeutungen und |
| **u, R$^8$** und **R$^{10}$** | die oben angegebenen Bedeutungen haben, mit der Maßgabe, daß pro Molekül entweder mindestens zwei Gruppen der allgemeinen Formel (XVII) oder<br>mindestens zwei Gruppen ausgewählt aus der Gruppe -SH und der allgemeinen Formel (XVIII) oder<br>mindestens eine Gruppe ausgewählt aus der Gruppe -SH und der allgemeinen Formel (XVIII) und **Y** mindestens einmal gleich N-H oder<br>**Y** mindestens zweimal gleich N-H<br>enthalten sind, |

c)

$$R^{10}-(R^8)_u-\underset{\substack{| \\ (R^8)_u-R^{10}}}{B^2}-(R^8)_u-R^{10} \qquad (XX),$$

wobei

**$B^2$** die in Anspruch 2 genannten Bedeutungen und

**u, $R^8$ und $R^{10}$** die oben angegebenen Bedeutungen haben, mit der Maßgabe, daß pro Molekül entweder mindestens drei Gruppen der allgemeinen Formel (XVII) oder mindestens drei Gruppen ausgewählt aus der Gruppe -SH und der allgemeinen Formel (XVIII) oder mindestens zwei Gruppen ausgewählt aus der Gruppe -SH und der allgemeinen Formel (XVIII) und **Y** mindestens einmal gleich N-H oder mindestens eine Gruppe ausgewählt aus der Gruppe -S-H und der allgemeinen Formel (XVIII) und Y mindestens zweimal gleich NH **Y** mindestens dreimal gleich N-H enthalten sind;
umgesetzt werden.

6. Verwendung der Organosiloxanverbindungen gemäß Anspruch 1 bis 4 zur Behandlung von Textilfasern, textilen Flächengebilden und Leder und als Stabilisatoren in synthetischen Polymeren.

Europäisches Patentamt

# EUROPÄISCHER RECHERCHENBERICHT

Nummer der Anmeldung
EP 98 11 4362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 659 930 A (RHONE-POULENC)<br>28. Juni 1995<br>&US5540952 (D)<br>* Anspruch 1 *<br>--- | 1-4,6 | C08G77/388<br>D06M15/643<br>C08G77/54 |
| X | US 5 663 222 A (GAY ET AL)<br>2. September 1997<br>* Anspruch 1 *<br>--- | 1-4,6 | |
| X | EP 0 502 821 A (CIBA-GEIGY)<br>9. September 1992<br>* Anspruch 1 *<br>----- | 1,3,4,6 | |

RECHERCHIERTE SACHGEBIETE (Int.Cl.6)
D06M
C08G

Der vorliegende Recherchenbericht wurde für alle Patentansprüche erstellt

| Recherchenort | Abschlußdatum der Recherche | Prüfer |
|---|---|---|
| DEN HAAG | 28. Januar 1999 | Lentz, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 98 11 4362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-1999

| Im Recherchenbericht angeführtes Patentdokument | Datum der Veröffentlichung | Mitglied(er) der Patentfamilie | Datum der Veröffentlichung |
|---|---|---|---|
| EP 659930 A | 28-06-1995 | FR 2714402 A | 30-06-1995 |
| | | AU 687113 B | 19-02-1998 |
| | | AU 8046494 A | 06-07-1995 |
| | | BR 9405456 A | 19-09-1995 |
| | | CA 2139013 A | 28-06-1995 |
| | | CN 1116258 A | 07-02-1996 |
| | | DE 69403431 D | 03-07-1997 |
| | | DE 69403431 T | 18-12-1997 |
| | | ES 2102173 T | 16-07-1997 |
| | | JP 10046473 A | 17-02-1998 |
| | | JP 2717942 B | 25-02-1998 |
| | | JP 7216754 A | 15-08-1995 |
| | | US 5540952 A | 30-07-1996 |
| | | US 5688889 A | 18-11-1997 |
| US 5663222 A | 02-09-1997 | FR 2642764 A | 10-08-1990 |
| | | US 5721297 A | 24-02-1998 |
| | | AT 146497 T | 15-01-1997 |
| | | AT 167884 T | 15-07-1998 |
| | | AU 4900990 A | 09-08-1990 |
| | | CA 2007931 A,C | 03-08-1990 |
| | | DE 69029416 D | 30-01-1997 |
| | | DE 69029416 T | 15-05-1997 |
| | | DE 69032456 D | 06-08-1998 |
| | | DK 388321 T | 06-01-1997 |
| | | EP 0388321 A | 19-09-1990 |
| | | EP 0665258 A | 02-08-1995 |
| | | ES 2097757 T | 16-04-1997 |
| | | ES 2118462 T | 16-09-1998 |
| | | FI 95719 B | 30-11-1995 |
| | | GR 3022633 T | 31-05-1997 |
| | | IL 92653 A | 29-12-1994 |
| | | JP 1864231 C | 08-08-1994 |
| | | JP 2235932 A | 18-09-1990 |
| | | NO 177751 B | 07-08-1995 |
| | | PT 93047 A,B | 31-08-1998 |
| EP 502821 A | 09-09-1992 | DE 59205197 D | 14-03-1996 |
| | | ES 2083136 T | 01-04-1996 |
| | | JP 5117282 A | 14-05-1993 |
| | | US 5185445 A | 09-02-1993 |

EPO FORM P0461

Für nähere Einzelheiten zu diesem Anhang : siehe Amtsblatt des Europäischen Patentamts, Nr.12/82